# EUROPEAN PATENT APPLICATION

(11) **EP 1 967 395 A1**
(43) Date of publication of application: **10.09.2008**
(21) Application number: 06843494.3
(22) Date of filing: 27.12.2006
(51) Int. Cl.: B60H 1/00

(54) **AIR CONDITIONER**

(30) Priority: 28.12.2005 JP 2005378644
(71) Applicant: Calsonic Kansei Corporation, Tokyo 164-8602 (JP)
(72) Inventor: ONDA, Masaharu c/o Calsonic Kansei Corporation, Tokyo 164-8602 (JP)
(74) Representative: Grünecker, Kinkeldey, Stockmair & Schwanhäusser Anwaltssozietät
(86) International application number: PCT/JP2006/326112
(87) International publication number: WO 2007/074878

(57) **Abstract**

An air conditioner (1) includes an air-blowing unit (4) and an air-conditioning unit (5).

The air-blowing unit (4) includes a fan case (9, 10) defining a pair of independent scroll chambers (6, 7), a pair of fans (9, 10) respectively provided in the pair of scroll chambers (6, 7). The air-conditioning unit (5) includes an air-conditioning case (13) defining an air passage (P) which air from the air-blowing unit (4) flows and air-conditioning components (14, 15, 17) provided in the air passage (P) and configured to condition air flowing from the air blowing unit (4) therethrough. A partition (25) partitioning a portion (P1) of the air passage (P) from an inlet (P0) to the most upwind air-conditioning component (14) into a pair of independent passages (P1a, P1b) is provided. The pair of independent passages (P1a, P1b) respectively communicate with discharge ports (6b, 7b) of the pair of scroll chambers.

## Description

### TECHNICAL FIELD

The present invention relates to an air conditioner, such as a vehicular air conditioner, including an air-blowing unit with a pair of fans, and an air-conditioning unit.

### BACKGROUND ART

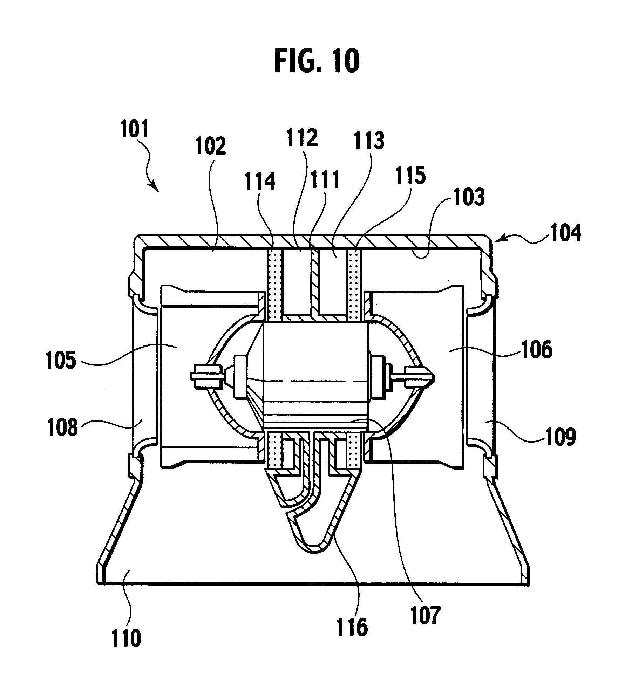

As a conventional art of an air conditioner, a vehicular air conditioner is disclosed in Japanese Patent Application Laid-Open No. 5-172100, for example. The vehicular air conditioner includes an air-blowing unit 101 and an air-conditioning unit (not shown) for conditioning air blown from the air-blowing unit 101, as shown in Fig. 10. The air-blowing unit 101 includes a casing 104 having two parallely-provided scroll chambers 102, 103, which have scroll centers matched to each other, and a pair of fans 105, 106 respectively accommodated in the scroll chambers 102, 103, and an electric motor 107 for driving the fans 105, 106. When the electric motor 107 is activated, the pair of fans 105, 106 rotate. When the fans 105, 106 rotate, air is introduced from intake ports 108, 109 into the scroll chambers 102, 103. The air introduced in the scroll chambers 102, 103 is discharged from the air-blowing unit 101 into the air-conditioning unit via a discharge port 110. The electric motor 107 is supported by a partition wall 111 defining the scroll chambers 102, 103. In both sides of the partition wall 111, porous bodies 114, 115 are provided apart from the partition wall 111 and the spaces between the partition wall 111 and the porous bodies 114, 115 are defined as air chambers 112, 113. Inside the discharge port 110 of the casing 104, a rib 116 projecting from the partition wall 111 toward the air flow direction is provided. According to this conventional art, noise, which is generated when air from the pair of fans 105, 106 flow into each other, is suppressed using the air chambers 112, 113, the porous bodies 114, 115 and the rib 116.

### DISCLOSURE OF THE INVENTION

However, according to the conventional art, the air discharged from respective outlets of the scroll chambers 102, 103 is to be flown into the discharge port 110 (an inlet of the air-conditioning unit) which has a remarkably larger passage cross-section compared to the respective outlets of the scroll chambers 102, 103. This can cause a rapid reduction in flow rate, unevenness or a mutual interference of the discharged air from the respective outlets of the scroll chambers 102, 103. As a result, a resistance in the passage or noise can be increased.

The present invention provides an air conditioner that suppresses a mutual interference of discharged air from a pair of fans.

A first aspect of the present invention is an air conditioner including: an air-blowing unit having a case defining a pair of independent scroll chambers, and a pair of fans respectively provided in the scroll chambers; and an air-conditioning unit including an air-conditioning case defining an air passage which air flowing from the air-blowing unit flows through, an air-conditioning components provided in the air passage and configured to condition air flowing therethough, and a partition partitioning a portion of the air passage between an inlet and the most upwind air-conditioning component into a pair of independent passages respectively communicating with the pair of scroll chambers.

A second aspect of the present invention is an air conditioner including: an air-blowing unit including a case defining a pair of independent scroll chambers, and a pair of fans respectively provided in the pair of scroll chamber; and an air-conditioning unit including an air-conditioning case defining an air passage which air flowing from the air-blowing unit flows through, and air-conditioning components provided in the air passage and configured to condition air flowing therethrough. The air passage of the air-conditioning unit includes an introduction passage between an inlet and a cooling heat exchanger as one of the air-conditioning components, a passage portion between the cooling heat exchanger and an air mixing door device provided downstream the cooling heat exchanger as one of the air-conditioning components, a hot air passage provided downstream the air mixing door device and having a heating heat exchanger as one of the air-conditioning components therein, a bypass passage provided downstream the air mixing door device and not having the heating heat exchanger therein, and an air mixing chamber provided at a confluence portion of the hot air passage and the bypass passage to mix hot air and cool air. The air passage of the air-conditioning unit is partitioned into a pair of independent passages that respectively communicate with the pair of scroll chambers and a confluence portion communicating the pair of independent passages is provided between the cooling heat exchanger and the air mixing door device.

### BRIEF DESCRIPTION OF THE DRAWINGS

Fig. 1 is a sectional view of a portion in front of a passenger compartment including an air conditioner according to an embodiment of the present invention;
Fig. 2 is a sectional view of the air conditioner according to the embodiment of the present invention;
Fig. 3 is a sectional view taken along the line A-A in Fig. 2;
Fig. 4 is a perspective view of the air conditioner in which a portion above the line A-A in Fig. 2 is removed;
Fig. 5 is a plan view schematically showing a relevant part of the air conditioner;
Fig. 6 is a diagram showing characteristics of noise level of the air conditioner during operation;
Fig. 7 is a sectional view of an air-conditioning unit of an air conditioner according to another embodiment of the present invention;
Figs. 8(a) and 8(b) are diagrams showing characteristics of flow rate distributions (vector) at a measured face along the line B-B shown in Fig. 7;
Figs. 9(a) and 9(b) are diagrams showing characteristics of static pressure distributions at the measured face along the line B-B shown in Fig. 7; and
Fig. 10 is a sectional view of a conventional air conditioner.

### DETAILED DESCRIPTION OF THE INVENTION

An air conditioner according to an embodiment of the present invention will be described with reference to the drawings.

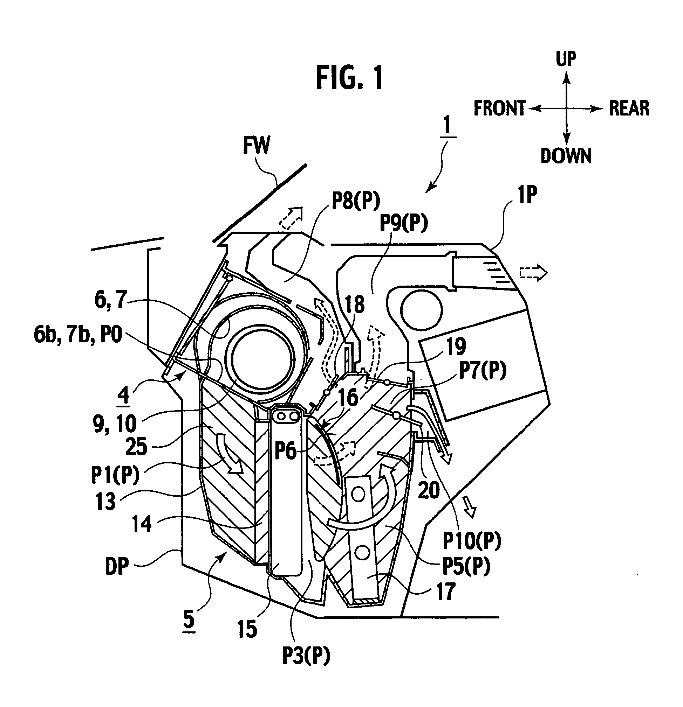

As shown in Fig. 1, an air conditioner 1 of the present embodiment is installed in an instrument panel IP in front of a passenger compartment 2. In other words, the air conditioner 1 is housed between a dash panel DP and the instrument panel IP of the vehicle. The air conditioner 1 includes an air-blowing unit 4 and an air-conditioning unit 5.

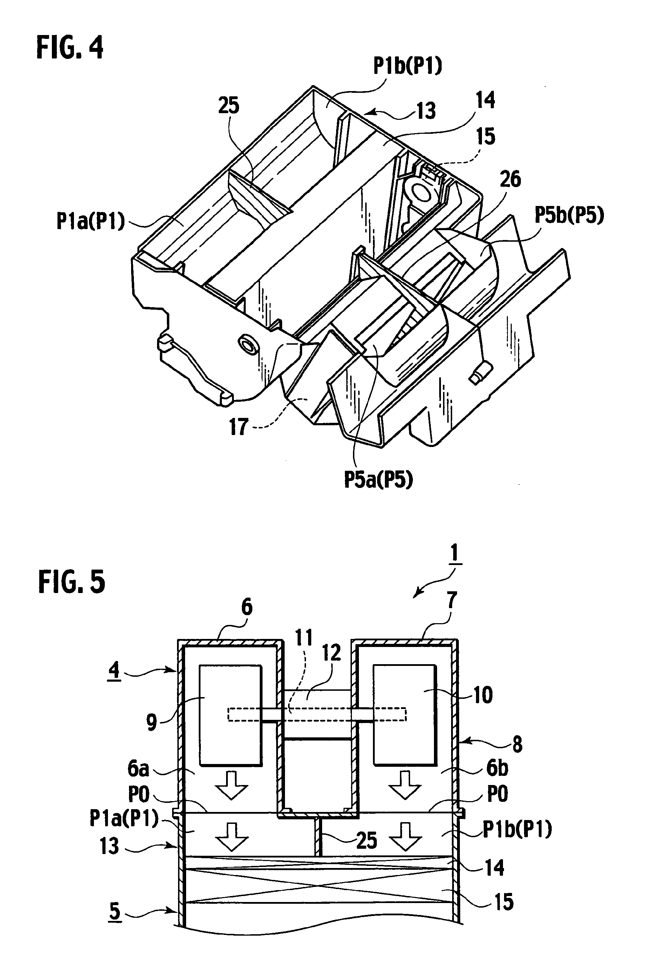

As shown in Fig. 5, the air-blowing unit 4 includes a casing 8 having a couple of scroll chambers 6, 7, which has scroll centers matched to each other, a pair of fans (so called a twin fan) 9, 10 housed in the respective scroll chambers 6, 7, and an electric motor 12 for driving the fans 9, 10. The fans 9, 10 are centrifugal sirocco fans. The electric motor 12 is disposed between the two fans 9, 10. The electric motor 12 has a drive shaft 11 serving as a rotating shaft to rotate the fans 9, 10 so that rotation of the drive shaft 11 of the electric motor 12 rotates the two fans 9, 10.

As shown in Fig. 1, the air-conditioning unit 5 has an air-conditioning case 13. The air-conditioning case 13 defines an air passage P therein. In the air passage P, a plurality of air-conditioning components 14, 15, 16, 17 are provided to condition air passing through the air passage P. The air-conditioning components are an air filter 14 for collecting foreign particles contained in the air, an evaporator 15 as a cooling heat exchanger, an air mixing door device 16 and a heater core 17 as a heating heat exchanger.

The air passage P of the air-conditioning unit 5 includes, in order from upstream to downstream, an introducing portion P1 extending from an inlet P0 to the air filter 14 and evaporator 15, a portion P3 from the evaporator 15 to the air mixing door device 16, a hot air passage P5 and a bypass passage P6 provided downstream the air mixing door device 16, an air mixing chamber P7 at a confluence of the hot air passage P5 and bypass passage P6, and outlet passages P8, P9, P10 branched from the air mixing chamber P7. The outlet passages P8, P9, P10 are a defroster outlet passage P8 that opens toward a front window FW of the vehicle and a vent outlet passage P9 that opens toward passenger's upper body and a foot outlet passage P10 that opens toward the passenger's lower body.

The hot air passage P5 and bypass passage P6 are provided in parallel and downstream the air mixing door device 16. The hot air passage P5 accommodates the heater core 17 as a heating heat exchanger. In contrast, the bypass passage P6 does not have the heater core 17. Thus, when cool air from the evaporator 15 flows through the hot air passage P5, the air is heated and flown to the air mixing chamber P7 as hot air and, when cool air flows through the bypass passage P6, the air flows to the air mixing chamber P7 simply as cool air.

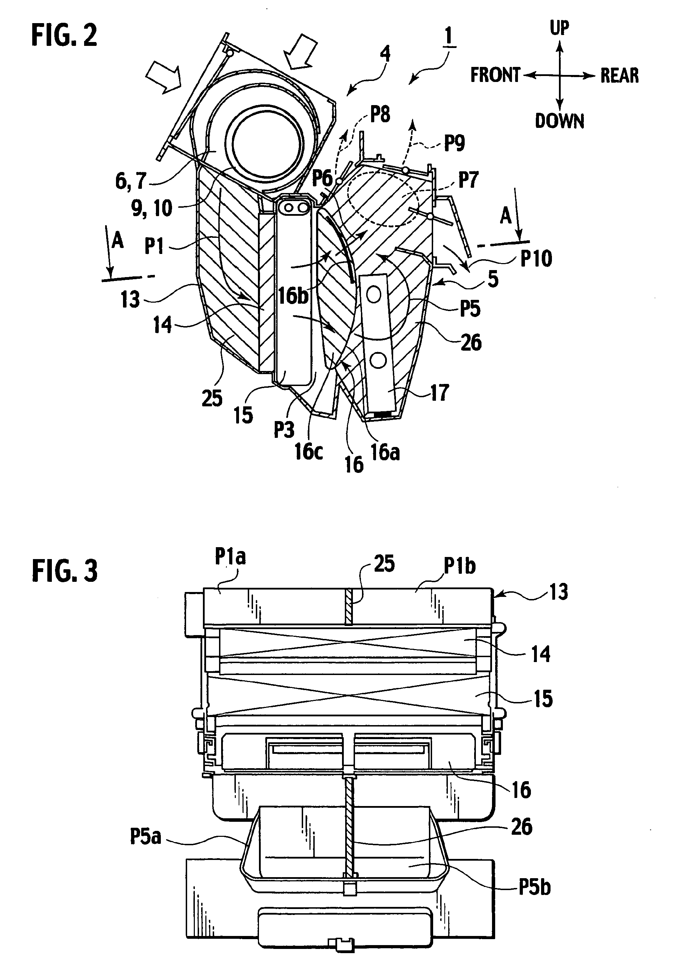

The air mixing door device 16 adjusts the distribution ratio of the cool air from the evaporator 15 given to the hot air passage P5 and bypass passage P6. The air mixing door device 16 is composed of a door case 16a and a sliding door 16b slidably supported by the door case 16a. The door case 16a has an opening (not shown) serving as an inlet of the bypass passage P6 and an opening (not shown) serving as an inlet of the hot air passage P5. When the sliding door 16b opens the hot air passage P5 and closes the bypass passage P6, as shown in Figs. 1 and 2, all cool air from the evaporator 15 is led to the hot air passage P5. On the other hand, when the sliding door 16b closes the hot air passage P5 and opens the bypass passage P6, all cool air from the evaporator 15 is led to the bypass passage P6. Further, when the sliding door 16b partially opens both of the hot air passage P5 and bypass passage P6, the cool air from the evaporator 15 flows through the respective of the hot air passage P5 and bypass passage P6. The hot air flown through the hot air passage P5 and the cool air flown through the bypass passage P6 are mixed in the air mixing chamber P7 to provide air having a desired temperature.

The air conditioner 1 according to the present embodiment has, as shown in Figs. 1 to 4, a partition plate 25 as a partition extending from the inlet P0 of the air passage P to the most upwind air-conditioning component (the air filter 14, in this example) in the air flow direction in the introducing portion P1 of the air passage. The introducing portion P1 of the air passage P is thus partitioned into a first independent passage P1a and a second independent passage P1b. Further, the passages P5, P6, P7 downstream the mixing door device 16 are partitioned into first independent passages and second independent passages by a partition plate 26 as a partition extending in the air flow direction.

The space portion P3 between the evaporator 15 and mixing door device 16 does not include the partition plates 25, 26 and the space portion P3 serves as a confluence portion P3 where the right and left independent passages P1a, P1b meet each other. Further, in the door case 16a of the air mixing door device 16, a partition plate 16c as a partition is provided separately from the partition plate 26. The partition plate 16c is disposed on the same plane as the partition plate 26 as if the partition plate 26 is continuously extended.

Here, the introducing portion P 1 extends in a direction discharge ports 6b, 7b of the scroll chambers 6, 7 extend and in a direction substantially perpendicular to the air flow directions in the evaporator 15 and air filter 14. Thus, the introducing portion P1 extends along the flow direction of the air blown from the air-blowing unit 4 and the air passing through the introducing portion P1 turns at a substantially right angle and flows in to the air filter 14 and evaporator 15.

Effects of the present embodiment will be described.

When the electric motor 12 of the air-blowing unit 4 is activated, the fans 9, 10 rotate. When the fans 9, 10 rotate, the air inside and outside the passenger compartment 2 is introduced into the air-blowing unit 4 and sent to the air-conditioning unit 5 disposed downstream the air-blowing unit 4.

The air sent from the air-blowing unit 4 to the air-conditioning unit 5 firstly flows through the introducing portion P1 of the air passage P and foreign particles are removed as passing through the air filter 14. Then, the air cleaned by the air filter 14 is cooled by the evaporator 15. The air cooled by the evaporator 15 flows into the air mixing door device 16 via the confluence portion P3. The air flown into the air mixing door device 16 is distributed to the hot air passage P5 or bypass passage P6, mixed in the air mixing chamber P7 and provided in a desired temperature. The air having a desired temperature is blown from the air mixing chamber P7 into the passenger compartment 2 via desired outlet passages P8, P9, P10 according an open/close state of mode selection doors 18, 19, 20.

As described above, the air temperature is controlled in the air mixing door device 16. For example, a full foot mode can be selected when the sliding door 16b closes the bypass passage P6 and opens the hot air passage P5 (see Figs. 1 and 2). On the other hand, a full cool mode can be selected when the sliding door 16b opens the bypass passage P6 and closes the hot air passage P5. Further, a temperature adjusting mode can be selected when the sliding door 16b partially opens the hot air passage P5 and bypass passage P6.

According to the present embodiment, the partition plate 25 partitions the portion between the inlet P0 to the air filter 14 of the air passage P of the air-conditioning unit 5 into right and left independent passages P1a, P1b. This prevents that the passage cross-section rapidly increases at an area from the independent discharge ports 6b, 7b of the air-blowing unit 4 to the introducing portion P1 of the air passage P. In such a structure, when the air from the independent discharge ports 6b, 7b of the air-blowing unit 4 flows into the air-conditioning unit 5, a rapidly reduced flow rate or a mutual interference between the air from the discharge ports 6b, 7b can be suppressed. As a result, noise of the air conditioner 1 can be reduced during operation. Further, since the air flowing through the evaporator 15 is guided by the partition plate 25, an unevenness in the air flow is reduced and the heat transfer efficiency in the evaporator 15 is improved.

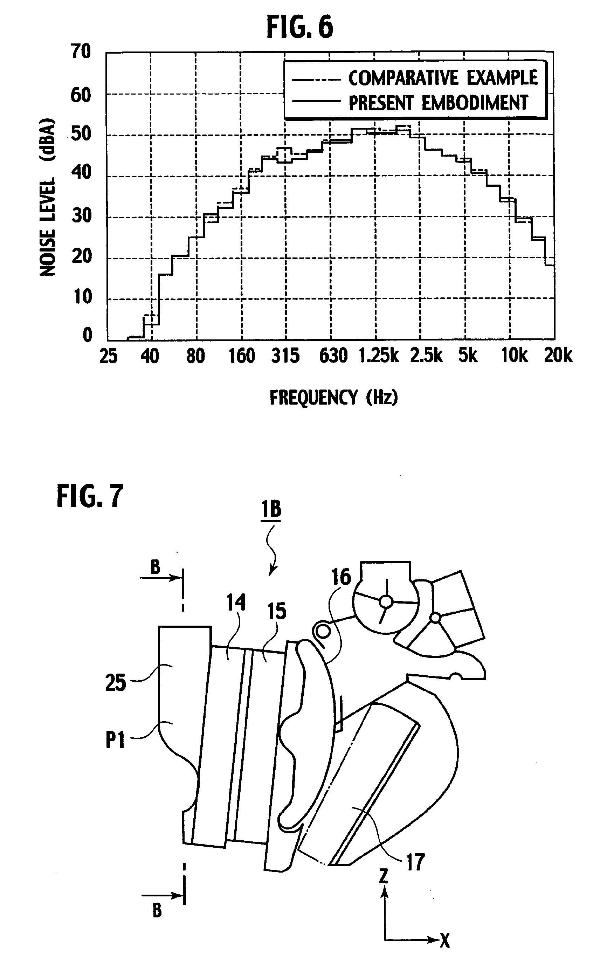

For example, according to an experiment, as shown in Fig. 6, the air conditioner with the partition plate 25, 26 of the present embodiment (see a solid line in Fig. 6) has a noise reduction effect of almost 1dBA, compared to an air conditioner without partition plates 25, 26 of a comparative example (see a chain line in Fig. 6). In particular, around frequency of 315 Hz, a noise reduction of about 1 to 3dBA was observed.

Fig. 7 shows an air conditioner 1B according to another embodiment of the present invention, which is similar to the air conditioner shown in Figs. 1 to 5.

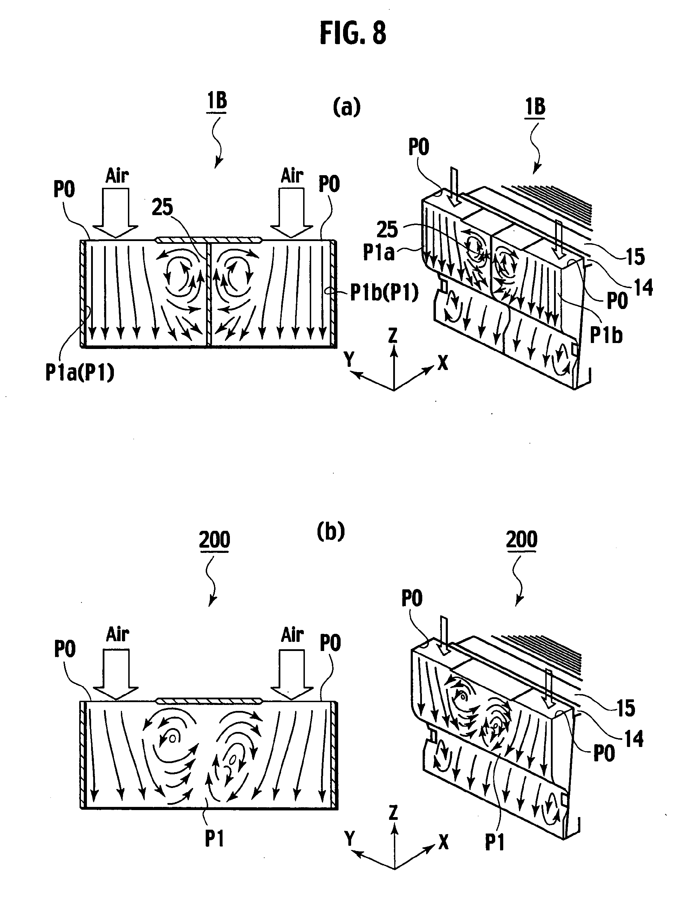

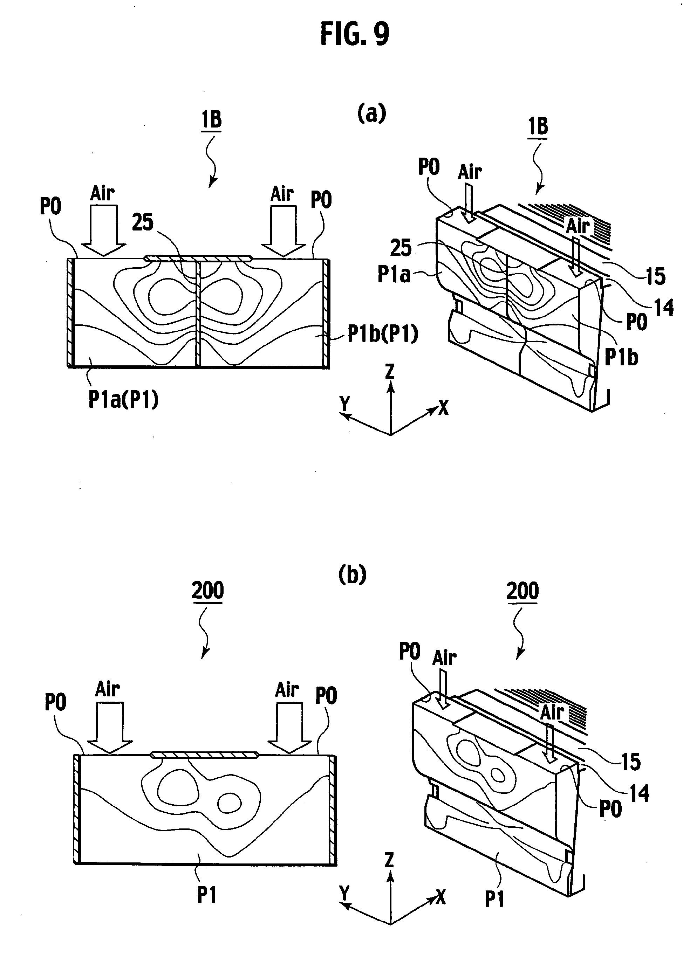

Figs. 8(a) and 8(b) show measured results of flow rate distribution (vector) at a measured face (a portion between the inlet P0 and the air filter 14 of the air passage P) along the line B-B shown in Fig. 7. Figs. 9(a) and 9(b) show measured results of static pressure distribution at the measured face along the line B-B shown in Fig. 7.

Here, Figs. 8(a) and 9(a) show flow rate distribution and static pressure distribution of the air conditioner 1B having the partition plate 25; and Figs. 8(b) and 9(b) show flow rate distribution and static pressure distribution of the air conditioner without a partition plate according to the comparative example.

Compared with the flow rate distribution (Fig. 8(b)) of the air conditioner 200 without a partition plate 25, according to the flow rate distribution (Fig. 8(a)) of the air conditioner 1B having the partition plate 25, a rapid reduction in flow rate of the air discharged from the respective fans 9, 10 and an interference between the discharged air from the both fans 9, 10 are reduced.

As described above, the above embodiments are effective to reduce noise of the air conditioner during operation. Further, the air amount sent from the respective fans to the heat exchangers can be made even and the heat transfer efficiency in the heat exchangers can be improved.

Further, the above embodiments provide air conditioners having a simple structure and reduced cost by simply providing the partition plate 25 extending in the air flow direction, compared to the conventional art, in which air chambers, a porous bodies and a rib are required.

The above embodiments have the structure including the partition plate 25 extending at an area between the inlet P0 of the air passage P and the air filter 14 in the air flow direction and the other partition plate 26 extending downstream the air mixing door device 16 in the air flow direction; however, it should be appreciated that the present invention is not limited to this example and the present invention may has a structure including the partition plate 25 without the other partition plate 26.

### Industrial Applicability

The present invention is applicable to not only a vehicular air conditioner but also other air conditioners for general machines or industrial machines, for example.

## Claims

1. An air conditioner comprising:
an air-blowing unit including a case defining a pair of independent scroll chambers, and a pair of fans respectively provided in the scroll chambers; and
an air-conditioning unit including an air-conditioning case defining an air passage which air from the air-blowing unit flows through, an air-conditioning component provided in the air passage and configured to condition air flowing therethrough, and a partition partitioning a portion of the air passage between an inlet and the most upwind air-conditioning component into a pair of independent passages respectively communicating with the pair of scroll chambers.

2. The air conditioner according to claim 1, wherein
the partition is a plate member.

3. The air conditioner according to claim 1, wherein
the partition extends along a direction of air blown from the air-blowing unit.

4. The air conditioner according to claim 1, wherein
the partition extends along a direction which discharge ports of the pair of scroll chambers extend.

5. The air conditioner according to claim 1, wherein
the pair of independent passages extend perpendicular to an air flow direction in the most upwind air-conditioning component.

6. An air conditioner comprising:
an air-blowing unit including a case defining a pair of independent scroll chambers, and a pair of fans respectively provided in the pair of scroll chamber; and
an air-conditioning unit including an air-conditioning case defining an air passage which air blown from the air-blowing unit flows through, and air-conditioning components provided in the air passage and configured to condition air therethrough,
wherein the air passage of the air-conditioning unit includes an introduction passage between an inlet and a cooling heat exchanger as one of the air-conditioning components, a passage portion between the cooling heat exchanger and an air mixing door device provided downstream the cooling heat exchanger as one of the air-conditioning components, a hot air passage provided downstream the air mixing door device and having a heating heat exchanger as one of the air-conditioning components therein, a bypass passage provided downstream the air mixing door device and not having the heating heat exchanger therein, and an air mixing chamber provided at a confluence portion of the hot air passage and the bypass passage to mix hot air and cool air, and
wherein the air passage of the air-conditioning unit is partitioned into a pair of independent passages that respectively communicate with the pair of scroll chambers, and a confluence portion communicating the pair of independent passages is provided between the cooling heat exchanger and the air mixing door device.

7. The air conditioner according to claim 6,
the air mixing door device includes a door case, an air mixing door slidably supported by the door case, a partition plate provided in the door case and partitioning a space in the case so that the partitioned spaces respectively continue to the pair of independent passages.
